# EUROPÄISCHE PATENTSCHRIFT

(11) **EP 0 429 933 B1**
(45) Veröffentlichungstag und Bekanntmachung des Hinweises auf die Patenterteilung: **28.07.1993**
(21) Anmeldenummer: 90121560.8
(22) Anmeldetag: 10.11.1990
(51) Int. Cl.: C01B 17/90

(54) **Verfahren zur Rückgewinnung von Schwefelsäure**
Process for the recovery of sulphuric acid
Procédé de récupération d'acide sulfurique

(30) Priorität: 24.11.1989 DE 3938915
(43) Veröffentlichungstag der Anmeldung: 05.06.1991
(73) Patentinhaber: BAYER AG, 51368 Leverkusen (DE)
(72) Erfinder: Lailach, Günter, Dr., W-4150 Krefeld (DE); Gerken, Rudolf, Dr., W-4150 Krefeld-Traar (DE)

(56) Entgegenhaltungen:
- EP-A- 0 022 181
- EP-A- 0 133 505
- EP-A- 0 262 510
- DE-A- 2 352 701
- DE-A- 2 618 121

## Beschreibung

Die Erfindung betrifft ein Verfahren zur Rückgewinnung von Schwefelsäure aus metallsulfathaltigen Dünnsauren durch Eindampfen und Abtrennen der festen Metallsulfate.

Die Rückgewinnung von Schwefelsäure aus metallsulfathaltigen Abfallschwefelsäuren, z.B. aus gebrauchten Beizlösungen oder der Dünnsäure, die bei der TiO₂-Herstellung nach dem Sulfatverfahren anfällt, ist nach verschiedenen Verfahren möglich, die je nach Zusammensetzung dieser verunreinigten Abfallsäuren mit mehr oder weniger großen technischen Problemen belastet sein können. So ist die Eindampfung bis zu ca. 65 %iger H₂SO₄ in der flüssigen Phase in Tauchbrenner-Eindampfern (DE-A-1 173 074) oder ähnlichen direkt beheizten Systemen durch hohen Energieverbrauch, großen Instandhaltungsaufwand und Abgasprobleme charakterisiert. Als energetisch wesentlich günstiger und weniger reparaturaufwendig hat sich die mehrstufige Eindampfung in Vakuumzwangsumlaufverdampfern erwiesen (EP-A-133 505), wobei Temperaturen von 80 bis 120° C bevorzugt werden. Dabei können jedoch Probleme durch die relativ geringen Temperaturen und Schwefelsäurekonzentrationen, bei denen die Metallsulfate kristallisieren, durch Inkrustierung der Apparate, insbesondere der Wärmeaustauschflächen, sowie durch Korrosion in Abhängigkeit von der jeweiligen Säurekonzentration in den Verdampfungsstufen auftreten, die bei der Eindampfung in Tauchbrenner-Eindampfern (DE-A-1 173 074), bei der die Dünnsäure in einer Stufe direkt bei ca. 150° C zu einer Suspension von Metallsulfaten, insbesondere Eisensulfat-Monohydrat, in ca. 65 %iger Schwefelsäure eingedampft wird, nicht beobachtet werden. In DE-A-2 618 121 wird vorgeschlagen, die gegebenenfalls mehrstufige Eindampfung der Dünnsäure so durchzuführen, daß die Kristallisation des Eisensulfat-Monohydrats in einer Eindampfstufe erfolgt, in der die Schwefelsäurekonzentration in der flüssigen Phase im Bereich von 60 bis 70 % liegt, während in eventuell vorgeschalteten Eindampfstufen nur so weit eingedampft wird, das noch kein Eisensulfat-Monohydrat kristallisiert. Dadurch soll die Abscheidung von Chromsulfat mit dem Eisensulfat verbessert werden.

Andererseits wird in DE-A-2 807 380 darauf hingewiesen, das bei der Dünnsäureeindampfung die Abscheidung von CaSO₄ und TiO₂ auf Rohrwänden und Vorrichtungen der Eindampfanlagen zu erheblichen Problemen führt, weil diese Abscheidungen nur schwierig zu entfernen sind. Um diese Abscheidung zu vermeiden, wird vorgeschlagen, in allen Eindampfstufen, auch denen mit geringer Schwefelsäurekonzentration, die Eindampfung in Gegenwart von festem Eisensulfat-Monohydrat durchzuführen, wobei gegebenenfalls bei höherer Schwefelsäurekonzentration abgeschiedenes Eisensulfat-Monohydrat zurückgeführt wird.

Der Fachmann steht nun vor dem Problem, diese einander widersprechenden Forderungen in Einklang zu bringen, die außerdem einer aus energetischen Gesichtspunkten optimalen Prozeßführung im Wege stehen. Zudem sind beide letz-genannten Prozesse auf eisensulfatreiche Dünnsäuren abgestellt, wie sie aus der Verarbeitung von Ilmenit als Titanrohstoff resultieren. Die Anwendbarkeit der jeweiligen Lehre auf die Aufarbeitung von Dünnsäure aus Prozessen, in denen Titanschlacke eingesetzt wird, ist fraglich, weil die Schlacke nur einen sehr geringen FeSO₄-Gehalt hat.

Aufgabe war es daher, ein Verfahren zur Verfügung zu stellen, das es erlaubt, sowohl Dünnsauren aus der Verarbeitung von Titanschlacke wie auch von Ilmenit unter Erzeugung einer beim Titanrohstoffaufschluß wiederverwendbaren Schwefelsäure aufzuarbeiten. Gleichzeitig sollte der Energie- und Wartungsaufwand beim Eindampfprozeß möglichst gering sein.

Überraschenderweise konnte diese Aufgabe durch das erfindungsgemäße Verfahren gelöst werden.

Gegenstand der Erfindung ist ein Verfahren zur Rückgewinnung von Schwefelsäure aus metallsulfathaltiger Abfallschwefelsäure durch Eindampfen und Abtrennen der festen Metallsulfate, wobei die Abfallschwefelsäure in einer Eindampfstufe 1 auf eine Konzentration von 26 bis 32 Gew.-% H₂SO₄ eingedampft wird, die dabei erhaltene Säure in einer mit Dampf beheizten Eindampfstufe 2 bei 120 bis 165°C und bei einem absoluten Druck von 1 bis 4 bar bis zu einer Schwefelsäurekonzentration von 40 bis 50 Gew.-% eingedampft wird, so daß in der eingedampften Säure mindestens 1 Gew.-% der wasserlöslichen Metallsulfate in fester Form suspendiert sind und wobei die Brüden aus der Eindampfstufe 2 als Heizmedium in einer Eindampfstufe 3 verwendet werden, in der die Suspension aus der Eindampfstufe 2 bis zu einer Konzentration von 60 bis 75 Gew.-% H₂SO₄ bei 80 bis 140°C und 40 bis 300 mbar eingedampft wird.

Eine besondere Ausführungsform des erfindungsgemäßen Verfahrens liegt darin, daß die aus der Eindampfstufe 3 ausgetragene Suspension ohne vorherige Abtrennung der festen Metallsulfate in einer mit Dampf beheizten Eindampfstufe 4 bis zu einer Konzentration von 72 bis 85 Gew.-% Schwefelsäure eingedampft wird.

Bevorzugt erfolgt die Eindampfung der Abfallschwefelsäure in der Eindampfstufe 1 bei Temperaturen unter 100°C, vorzugsweise unter 90°C.

In einer weiteren besonderen Ausführungsform wird ein Teil der in der Eindampfstufe 2 erzeugten Brüden zur Eindampfung der Abfallschwefelsäure in der Eindampfstufe 1 genutzt.

Die Säure aus Eindampfstufe 1 wird pumpendruckseitig vorzugsweise in die Kreislaufleitung der Eindampfstufe 2 eingespeist.

Somit wird durch die oben beschriebene dreistufige Eindampfung die Dünnsäure auf eine Konzentration von 60 bis 75 Gew.-% gebracht. Gegebenenfalls kann die Schwefelsäure in einer vierten Eindampfstufe bis auf 85 Gew.-% weiter konzentriert werden. Erfindungsgemäß erfolgt die Konzentrierung von 10 bis 26 %igen Dünnsäuren in einer Eindampfstufe 1 bis zu einer Konzentration von maximal 32 Gew.-% H₂SO₄ (bezogen auf die gesamte Flüssigkeit) bei Temperaturen unter 100°C, vorzugsweise unter 90°C. Es wurde gefunden, das unter diesen Bedingungen aus den üblichen Dünnsäuren nur geringe Mengen CaSO₄ abgeschieden werden und das dieses leichter von Rohr- und Apparatewänden zu entfernen ist, als CaSO₄ nach einer Abscheidung bei höherer Temperatur. Die Eindampfung kann in einem mit Dampf oder mit einem Teil der Brüden aus der Eindampfstufe 2 beheizten Vakuumverdampfer erfolgen oder nach einem der bekannten vorteilhaften Prozesse, die verschiedene Prozeßabwärme nutzen (DE-A-2 529 708, DE-A-2 529 709, EP-A-313 715).

Die in der Eindampfstufe 1 auf eine Konzentration von 26 bis 32 Gew.-% H₂SO₄ eingedampfte Dünnsäure wird in einer Eindampfstufe 2 bei 120 bis 165°C auf eine Konzentration von 40 bis 50 Gew.-% H₂SO₄ (berechnet als salzfreie Schwefelsäure) eingedampft, auf jeden Fall aber so weit, daß ein Teil der Metallsulfate in fester Form in der Schwefelsäure suspendiert ist. Die Verdampfung des Wassers erfolgt in der Eindampfstufe 2 bei einem absoluten Druck von 1 bis 4 bar, so daß die Brüden günstig zur weiteren Eindampfung der gelöste und feste Metallsulfate enthaltenden Schwefelsäure auf eine Konzentration von 60 bis 75 Gew.-% H₂SO₄ in einer Eindampfstufe 3 genutzt werden können, in der die Wasserverdampfung bei 80 bis 140°C und 40 bis 300 mbar erfolgt.

Die aus der Eindampfstufe 3 abfließende Suspension von Metallsulfaten in 60 bis 75 %iger Schwefelsäure kann auf geeignete Weise gekühlt werden (z.B. entsprechend EP-A-133 505). Danach kann eine wiederverwendbare Schwefelsäure von den festen Metallsulfaten abgetrennt werden.

Bei der Verarbeitung von Dünnsäure aus einem Titanschlackeaufschluß ist es besonders vorteilhaft, die aus der Eindampfstufe 3 ausfließende Schwefelsäure-Metallsulfatsuspension direkt ohne vorherige Abtrennung der festen Metallsulfate in einer Eindampfstufe 4 auf eine Konzentration von 72 bis 85 % H₂SO₄ einzudampfen. In dieser mit Frischdampf beheizten Eindampfstufe 4 erfolgt die Eindampfung bei 120 bis 150°C und einem Druck von 40 bis 200 mbar.

Für die Dünnsäureeindampfung in den Eindampfstufen 2 bis 4 entsprechend dem erfindungsgemäßen Verfahren werden Zwangsumlaufverdampfer bevorzugt eingesetzt.

Es wurde gefunden, daß die bekannten Korrosionsprobleme, die durch den Chloridgehalt der Dünnsäure verursacht werden (E. Schmoll, Escher Wyss Mitteilungen 2/1978-1/1979, S. 17 bis 20), vermieden werden können, wenn die Einspeisung der 26 bis 32 %igen Dünnsaure aus der Eindampfstufe 1 in die Eindampfstufe 2 nach der Kreislaufpumpe erfolgt, vorzugsweise in den im Kreislauf geförderten Säurestrom vor oder nach dem dampfbeheizten Wärmeaustauscher.

Die besonderen Vorteile des erfindungsgemäßen Verfahrens gegenüber dem Stand der Technik sind:
a) geringer Dampfverbrauch durch Mehrstufenverdampfung unter Ausnutzung der Brüden aus der Eindampf stufe 2,
b) geringer Kühlwasserverbrauch durch die mehrstufige Eindampfung bei hohem Temperaturniveau,
c) kurze Betriebsstillstände zum Entfernen von Ablagerungen, weil in der Eindampfstufe 1 nur wenig, relativ weiche Ablagerungen entstehen und die Ablagerungen in den Eindampfstufen 2 bis 4 durch Spülen mit Wasser entfernt werden können und
d) Vermeidung von Korrosionsproblemen, die durch den Chloridgehalt der Dünnsäure verursacht werden.

Das erfindungsgemäße Verfahren soll anhand von Beispielen näher erläutert werden, ohne das dadurch der Umfang der Erfindung eingeschränkt wird.

### Beispiel 1 (Vergleichsbeispiel)

Es wurde Dünnsäure folgender Zusammensetzung gemäß dem Stand der Technik (EP-A-133 505) aufgearbeitet (alle Angaben in Gew.-%):

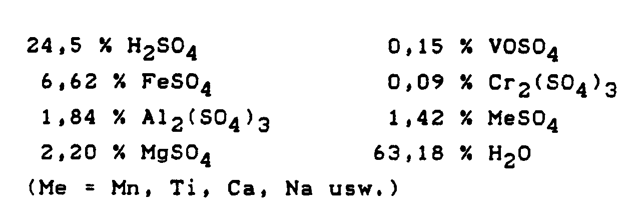

Die Eindampfstufe 1 wurde entsprechend der DE-A-2 529 708 mit Abwärme aus dem Schwefelsäure-Kontaktsystem betrieben. Die Eindampfung auf 28 % H₂SO₄ erfolgte bei 73°C. Die weitere Eindampfung bis zu einer Konzentration von 68 % H₂SO₄ (gerechnet als salzfreie Säure entsprechend 100. H₂SO₄:(H₂SO₄ + H₂O) = % H₂SO₄) erfolgte in einer Vakuumzwangsumlaufverdampferanlage.

Die Säure wurde in die mit Dampf beheizte erste Eindampfstufe dieser Anlage eingespeist, in der die Eindampfung bei 118°C und 760 mbar bis zu einer Konzentration von 41,5 % H₂SO₄ (salzfrei) erfolgte. Die aus der ersten in die zweite Eindampfstufe geleitete Säure enthielt alle Metallsulfate außer CaSO₄ in gelöster Form.

In der zweiten Eindampfstufe, die mit den Brüden aus der ersten Eindampfstufe beheizt wurde, erfolgte die Eindampfung bei 76°C und 50 mbar bis zu einer Konzentration von 59 % H₂SO₄.

Die aus der zweiten Eindampfstufe ausgetragene Suspension von Metallsulfaten in 59 %iger Schwefelsäure mußte in einer dritten, dampfbeheizten Eindampfstufe bei 90°C und 50 mbar weiter eingedampft werden, um die gewünschte Konzentration von 68 % H₂SO₄ zu erhalten. Die Brüden aus der zweiten und dritten Eindampfstufe wurden direkt mittels Kühlwasser kondensiert und abgeleitet.

Nachdem die aus Eindampfstufe 3 ausgetragene Suspension in einer Rührkaskade während 22 h von 90°C auf 54°C abgekühlt worden war, wurden die festen Metallsulfate durch Druckfiltration abgetrennt. Das Filtrat hatte folgende Zusammensetzung:

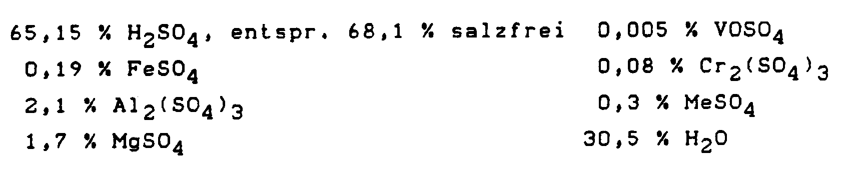

Die Anlage wurde monatlich gereinigt, wobei Ablagerungen in der zweiten und dritten Eindampfstufe leicht mit Wasser zu entfernen waren. In der ersten Eindampfstufe bestanden die Ablagerungen im wesentlichen aus Calciumsulfat und konnten mit Druckwasser jeweils nur unvollständig entfernt werden. Die zum Reinigen erforderliche Stillstandszeit der Anlage betrug jeweils zwischen 30 und 50 Stunden.

### Beispiel 2

Dünnsäure (Zusammensetzung wie in Beispiel 1) wurde in einer Eindampfstufe 1 gemäß DE-A-2 529 708 auf 28,3 % H₂SO₄-Konzentration (salzhaltig) eingedampft und in die Eindampfstufe 2 einer Zwangsumlaufverdampferanlage gemäß der vorliegenden Erfindung eingespeist. Die Einspeisung erfolgte über einen Wärmetauscher, der mit einem Teil der Brüden aus Eindampfstufe 2 beheizt wurde und in dem die Säure auf 107°C aufgeheizt wurde, pumpendruckseitig in die Kreislaufleitung. In der dampfbeheizten Eindampfstufe 2 wurde die Säure bei 158°C und 2,2 bar (absolut) auf eine Konzentration von 47 % H₂SO₄ (gerechnet als salzfreie Säure) eingedampft. Dabei kristallisierte ein Teil des Eisensulfats. Die Brüden wurden in den Vorheizwärmetauscher und den Wärmetauscher der Eindampfstufe 3 geleitet.

Die aus der Eindampfstufe 2 ausgetragene Suspension wurde in der Eindampfstufe 3 bei 107°C und 100 mbar auf eine Konzentration von 68 % H₂SO₄ eingedampft und direkt in die Rührkaskade ausgetragen. Die Brüden aus der Eindampfstufe 3 wurden durch indirekte Kühlung mit Kühlwasser kondensiert. Der spezifische Kühlwasserbedarf lag bei ca. 65 % desjenigen im Vergleichsbeispiel 1.

Die Abkühlung und Filtration der Suspension erfolgte analog Beispiel 1. Die Filtrationsgeschwindigkeit lag jedoch ca. 30 % höher als nach der Eindampfung gemäß Beispiel 1. Die Zusammensetzung der als Filtrat erhaltenen 68 %igen Schwefelsäure war im Rahmen der Analysengenauigkeit identisch mit derjenigen in Beispiel 1.

Der monatliche Spülrhythmus wurde beibehalten. Die Ablagerungen in der Eindampfstufe 2 waren jedoch mit Wasser relativ leicht zu entfernen, so daß die Stillstandszeit für die gesamte Reinigung auf 15 bis 20 Stunden verkürzt werden konnte.

### Beispiel 3

Die Eindampfung der Dünnsäure (Zusammensetzung wie in Beispiel 1) erfolgte analog Beispiel 2, jedoch wurde die aus der Eindampfstufe 3 ausgetragene Suspension von Metallsulfaten in 68 %iger Schwefelsäure nicht in die Rührkaskade, sondern in eine Eindampfstufe 4 geleitet.

In der dampfbeheizten Eindampfstufe 4 erfolgte die weitere Eindampfung bei 140°C und 40 mbar. Die ausgespeiste Suspension wurde in einem Wärmetauscher von 140°C auf 90°C gekühlt und in die Rührkaskade eingeleitet, in der während 25 Stunden die Abkühlung auf 50°C erfolgte. Die Suspension war gut filtrierbar. Die als Filtrat erhaltene Schwefelsäure hatte folgende Zusammensetzung:

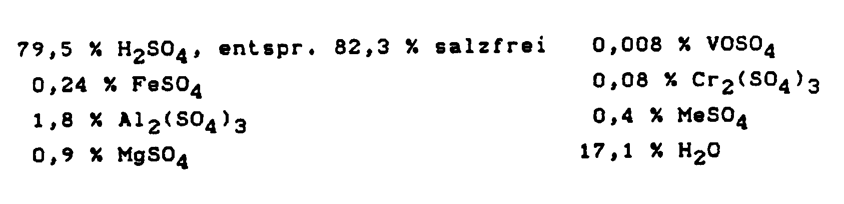

## Patentansprüche

1. Verfahren zur Rückgewinnung von Schwefelsäure aus metallsulfathaltiger Abfallschwefelsäure durch Eindampfen und Abtrennen der festen Metallsulfater wobei die Abfallschwefelsäure in einer Eindampfstufe 1 auf eine Konzentration von 26 bis 32 Gew.-% H₂SO₄ eingedampft wird, die dabei erhaltene Säure in einer mit Dampf beheizten Eindampfstufe 2 bei 120 bis 165°C und bei einem absoluten Druck von 1 bis 4 bar bis zu einer Schwefelsäurekonzentration von 40 - 50 Gew.-% eingedampft wird, so daß in der eingedampften Säure mindestens 1 Gew.-% der wasserlöslichen Metallsulfate in fester Form suspendiert sind und wobei die Brüden aus der Eindampfstufe 2 als Heizmedium in einer Eindampfstufe 3 verwendet werden, in der die Suspension aus der Eindampfstufe 2 bis zu einer Konzentration von 60 bis 75 Gew.-% H₂SO₄ bei 80 bis 140°C und 40 bis 300 mbar eingedampft wird.

2. Verfahren nach Anspruch 1, dadurch gekennzeichnet, daß die aus der Eindampfstufe 3 ausgetragene Suspension ohne vorherige Abtrennung der festen Metallsulfate in einer mit Dampf beheizten Eindampfstufe 4 bis zu einer Konzentration von 72 bis 85 Gew.-% Schwefelsäure eingedampft wird.

3. Verfahren nach einem der Ansprüche 1 oder 2, dadurch gekennzeichnet, daß die Eindampfung der Abfallschwefelsäure in der Eindampfstufe 1 bei Temperaturen unter 100°C, vorzugsweise unter 90°C erfolgt.

4. Verfahren nach einem oder mehreren der Ansprüche 1 bis 3, dadurch gekennzeichnet, daß ein Teil der in der Eindampfstufe 2 erzeugten Brüden zur Eindampfung der Abfallschwefelsäure in der Eindampfstufe 1 genutzt wird.

5. Verfahren nach einem oder mehreren der Ansprüche 1 bis 4, dadurch gekennzeichnet, daß die Säure aus Eindampfstufe 1 pumpendruckseitig in die Kreislaufleitung der Eindampfstufe 2 eingespeist wird.

## Claims

1. A process for the recovery of sulfuric acid from waste sulfuric acid containing metal sulfates by concentration through evaporation and removal of the solid metal sulfates, the waste sulfuric acid being concentrated by evaporation to a concentration of 26 to 32% by weight H₂SO₄ in an evaporation stage 1, the acid obtained being concentrated by evaporation in a steam-heated evaporation stage 2 at 120 to 165°C and under an absolute pressure of 1 to 4 bar to a sulfuric acid concentration of 40 to 50% by weight so that at least 1% by weight of the water-soluble metal sulfates is suspended in solid form in the acid concentrated by evaporation and the vapors from evaporation stage 2 being used as heating medium in an evaporation stage 3 in which the suspension from evaporation stage 2 is concentrated by evaporation at 80 to 140°C/40 to 300 mbar to a concentration of 60 to 75% by weight H₂SO₄.

2. A process as claimed in claim 1, characterized in that, without preliminary separation of the solid metal sulfates, the suspension discharged from evaporation stage 3 is concentrated by evaporation to a concentration of 72 to 85% by weight sulfuric acid in a steam-heated evaporation stage 4.

3. A process as claimed in claim 1 or 2, characterized in that concentration of the waste sulfuric acid by evaporation in evaporation stage 1 takes place at temperatures below 100°C and preferably at temperatures below 90°C.

4. A process as claimed in one or more of claims 1 to 3, characterized in that the vapors produced in evaporation stage 2 are partly used for concentrating the waste sulfuric acid by evaporation in evaporation stage 1.

5. A process as claimed in one or more of claims 1 to 4, characterized in that the acid from evaporation stage 1 is fed into the circulation pipe of evaporation stage 2 on the pump pressure side.

## Revendications

1. Procédé pour récupérer l'acide sulfurique à partir d'un acide sulfurique résiduaire contenant des sulfates métalliques par évaporation et séparation des sulfates métalliques solides, dans lequel l'acide sulfurique résiduaire est porté dans un étage d'évaporation 1 à une concentration de 26 à 32 % en poids d'H₂SO₄, l'acide ainsi obtenu est porté dans un étage d'évaporation 2 chauffé à la vapeur d'eau à des températures de 120 à 165°C sous une pression absolue de 1 à 4 bar à une concentration en acide sulfurique de 40 à 50 % en poids, de sorte que, dans l'acide concentré par évaporation, au moins 1 % en poids des sulfates métalliques solubles dans l'eau est en suspension à l'état solide, et les vapeurs provenant de l'étage d'évaporation 2 sont utilisées en tant que fluide chauffant dans un étage d'évaporatiom 3 dans lequel la suspension évacuée de l'étage d'évaporation 2 est portée à une concentration de 60 à 75 % en poids d'H₂SO₄ à des températures de 80 à 140°C sous des pressions de 40 à 300 mbar.

2. Procédé selon la revendication 1, caractérisé en ce que la suspension évacuée de l'étage d'évaporation 3 est portée, sans séparation préalable des sulfates métalliques solides, à une concentration de 72 à 85 % en poids d'acide sulfurique dans un étage d'évaporation 4 chauffé à la vapeur d'eau.

3. Procédé selon l'une des revendications 1 ou 2, caractérisé en ce que l'évaporation de l'acide sulfurique résiduaire dans l'étage d'évaporation 1 est réalisé à des températures inférieures à 100°C et de préférence inférieures à 90°C.

4. Procédé selon une ou plusieurs des revendications 1 à 3, caractérisé en ce qu'une partie des vapeurs produites à l'étage d'évaporation 2 est utilisée pour l'évaporation de l'acide sulfurique résiduaire dans l'étage d'évaporation 1.

5. Procédé selon une ou plusieurs des revendications 1 à 4, caractérisé en ce que l'acide provenant de l'étage d'évaporation 1 est envoyé par une pompe sous pression dans le circuit de l'étage d'évaporation 2.
